# FASCICULE DE BREVET EUROPEEN

(11) **EP 3 209 507 B1**
(45) Date de publication et mention de la délivrance du brevet: **12.12.2018**
(21) Numéro de dépôt: 15783993.7
(22) Date de dépôt: 16.10.2015
(51) Int. Cl.: B60C 13/00

(54) **DISPOSITIF DE PROTECTION D'UN FLANC DE PNEU**
VORRICHTUNG ZUM SCHÜTZEN EINER REIFENWAND
DEVICE FOR PROTECTING A TYRE WALL

(30) Priorité: 21.10.2014 FR 1460119
(43) Date de publication de la demande: 30.08.2017
(73) Titulaire: Compagnie Générale des Etablissements Michelin, 63000 Clermont-Ferrand (FR)
(72) Inventeur: BUFFETAUD, Benoit, F-63040 Clermont Ferrand Cedex 9 (FR); GODEAU, Gilles, F-63040 Clermont-Ferrand Cedex 9 (FR); LAPRA, Laurence, F-63040 Clermont-Ferrand Cedex 9 (FR); VANDAELE, Mathieu, F-63040 Clermont-Ferrand Cedex 9 (FR)
(74) Mandataire: Diernaz, Christian
(86) Numéro de dépôt international: PCT/EP2015/073971
(87) Numéro de publication internationale: WO 2016/062623

(56) Documents cités:
- EP-A1- 2 551 128
- JP-A- 2004 291 937
- US-A1- 2013 075 006

## Description

### DOMAINE DE L'INVENTION

La présente invention concerne les pneus de véhicules fortement chargés comme les pneus destinés à équiper des véhicules poids lourd. Elle concerne plus particulièrement un dispositif de protection de ces pneus contre d'éventuelles agressions subies par les flancs de ces pneus.

### ÉTAT DE LA TECHNIQUE

Un pneu pour véhicule poids lourd comprend des bourrelets destinés à venir en contact avec une jante de montage, des flancs et un sommet. Le sommet du pneu comprend une armature de renforcement surmontée radialement à l'extérieur par une bande de roulement dont une surface - dite surface de roulement - est destinée à venir en contact avec une chaussée ou un sol pendant le roulage du véhicule. Chaque flanc assure la liaison entre le sommet et l'un des bourrelets.

Il est connu que les pneus pour véhicule poids lourd, notamment ceux utilisés sur des réseaux routiers de piètre qualité, peuvent subir des agressions lors de roulage ou de manoeuvres. Ces mêmes pneus peuvent également venir lors de roulage en ville en contact avec des trottoirs qui dans certaines conditions peuvent être agressé et blesser l'un des flancs. Ces agressions sont le fait d'obstacles venant indenter un des flancs d'un pneu. Ces agressions peuvent avoir pour conséquence de solliciter violemment les armatures de carcasse et de sommet voire même d'aller jusqu'à provoquer des ruptures de la matière caoutchoutique présente entre les câbles de l'armature de carcasse avec toutes les conséquences que l'on peut imaginer, notamment perte de pression dans le pneu.

Ces mêmes agressions, sans provoquer de cassures à l'instant du contact, peuvent affecter la résistance du pneu aux flexions répétées ; cela est dû aux grandes déformations subies par les matériaux au moment du contact avec un obstacle.

Lors de roulage sur des routes comportant des obstacles ou objets divers, il peut arriver que les flancs soient soumis à des agressions exercées par ces obstacles ou ces objets. Si la majorité de ces agressions n'a que peu d'influence sur la tenue des flancs, il peut toutefois apparaître des cassures dans le flanc sollicité. Cela est bien entendu fortement préjudiciable à la durée de vie des pneus puisque les flancs sont très souvent non réparables, les cassures se propageant entre les câbles de l'armature de carcasse renforçant les flancs.

Ce problème est connu et il a déjà été proposé des solutions, mais il semblerait qu'aucune des solutions connues ne soit pleinement satisfaisante.

On connaît notamment la demande WO2009/029088 qui décrit un pneu pour un usage tout terrain, ce pneu étant pourvu de blocs de protection sur ses flancs. Ces blocs de protection ont des surfaces inclinées qui permettent d'éviter tout accrochage avec un objet externe. Les blocs sont disposés sur au moins deux cercles concentriques à l'axe de rotation de façon à être placés en alternance mais sans contact entre eux.

On connaît notamment la demande US2013/0092308-A1 qui décrit un pneu dont les flancs sont pourvus d'une pluralité de motif en relief sur les flancs, ces motifs ayant une forme massive et sont placés sur deux lignes circonférentielles les uns à côté des autres sur chaque ligne avec un espace suffisant afin que chaque motif d'une ligne s'intercale partiellement entre deux motifs de l'autre ligne et puissent se déformer librement.

La demande US 2013/075006 A1 décrit un pneu comprenant des reliefs destinés à augmenter les turbulences de l'écoulement de l'air autour du pneu en roulage afin de réduire la résistance au roulement.

### Définitions :

Plan médian équatorial : c'est un plan perpendiculaire à l'axe de rotation et passant par les points du pneu radialement les plus éloignés dudit axe.

Par direction radiale, on entend dans le présent document toute direction qui est perpendiculaire à l'axe de rotation du pneu.

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

### BREF EXPOSE DE L'INVENTION

La présente invention vise à fournir un pneu dont au moins un flanc est protégé des agressions externes subies par l'un des flancs d'un pneu lors du contact avec un obstacle pendant le roulage de ce pneu. Ce contact peut se traduire par un effort violent ayant une composante dirigée dans une direction pointant vers l'intérieur de la cavité interne du pneu et une autre composante dirigée dans une direction circonférentielle.

À cet effet, l'invention a pour objet un pneu pour véhicule destiné à porter de lourdes charges, ce pneu comprenant une armature de carcasse ayant des renforts, ce pneu comportant une partie sommitale comprenant une bande de roulement destinée à être en contact avec une chaussée lors d'un roulage, cette partie sommitale comprenant une armature de sommet étant prolongée de part et d'autre par des flancs, ces flancs étant eux-mêmes prolongés par des bourrelets destinés à venir en contact avec une jante de montage, ce pneu étant pourvu d'un dispositif de protection d'au moins un flanc contre les agressions extérieures, ce dispositif de protection comprenant une pluralité d'éléments en relief formés sur le flanc à protéger, cette pluralité d'éléments en relief de hauteur H étant disposée suivant la direction circonférentielle. Ce pneu est tel que chaque élément en relief comprend une région intermédiaire de forme allongée dans la direction circonférentielle et cette région intermédiaire comprenant deux extrémités et est prolongée, à chacune de ses deux extrémités, par une extension faisant un angle non nul avec la région intermédiaire allongée de l'élément de relief. En outre, chaque élément de relief est formé par au moins deux parties en vis-à-vis, ces parties en vis-à-vis sont, au moins partiellement, disjointes l'une de l'autre selon une zone de séparation, cette zone de séparation étant orientée de manière substantielle dans la direction circonférentielle et s'étendant au moins partiellement dans chaque extension. En outre, chaque partie en vis-à-vis est apte à entrer en contact avec l'autre partie du même élément de relief de façon à fermer au moins partiellement la zone de séparation existant entre lesdites deux parties en vis-à-vis afin de générer un frottement par glissement d'une partie sur l'autre lorsque l'une desdites parties entre en contact avec un obstacle externe, dans le but de réduire les risques de déchirures du flanc.

Selon une variante intéressante, chaque extension d'un élément de relief du dispositif fait un angle au moins égal à 40° avec la direction circonférentielle

De façon préférentielle, les parties des éléments en relief du dispositif de protection destinées à entrer en contact les unes avec les autres sont reliées entre elles de manière solidaire les unes avec les autres grâce à la présence de pont de matière.

De façon préférentielle, chaque partie d'élément en relief du dispositif de protection ayant une hauteur et une longueur circonférentielle, la zone de séparation entre deux parties d'un même élément en relief est au moins égale à 50% de la surface de chaque partie, cette dernière surface étant égale au produit de sa hauteur par sa longueur mesurée dans la direction circonférentielle.

Afin d'ajuster au mieux le dispositif de protection aux conditions de roulage et aux divers types d'obstacles il est avantageux que les parties de chaque élément en relief du dispositif de protection comportent des géométries augmentant les efforts de frottement dans la zone de séparation.

Un moyen d'ajustement des forces de frottement par glissement consiste à former sur les parois en vis-à-vis formant la zone de séparation une géométrie comportant des ondulations ou des zigzags ou tout autre relief.

Un autre moyen d'augmentation des forces de frottement par glissement consiste à former une rugosité adaptée sur les parois en vis-à-vis des parties de chaque élément de relief, ces parois délimitant la zone de séparation.

Préférentiellement, la surface de séparation entre deux parties d'un élément de relief du dispositif de protection s'étend sur une hauteur au moins égale à 50% de la hauteur de chaque partie d'élément en relief.

Encore plus préférentiellement, cette hauteur est au moins égale à 80% de la hauteur de chaque partie d'élément en relief.

Pour un pneu destiné à un véhicule poids lourd de diamètre au siège égal à 20 pouces, il a été trouvé que les dimensions des éléments de relief du dispositif de protection étaient préférentiellement les suivantes :
- la longueur circonférentielle moyenne L hors tout (c'est à dire comprenant les extensions à chaque extrémité) de chaque élément en relief est au moins égale à 20 mm et au plus égale à 150 mm,
- la hauteur H est au moins égale à 2 mm et au plus 7 mm (cette hauteur est encore plus préférentiellement inférieure à 10 mm),
- l'épaisseur E est au moins égale à 0.5 fois la hauteur H et au plus 3 fois la même hauteur.

### BREVE DESCRIPTION DES FIGURES

La figure 1 représente une vue en perspective d'une partie d'un pneu comprenant un dispositif de protection d'un flanc selon une première variante de l'invention ;
La figure 2 représente une vue en coupe selon un plan II-II d'un élément de relief du dispositif montré avec la figure 1 ;
La figure 3 montre une vue en coupe de l'élément de relief montré avec la figure 2 et soumis à l'action d'un obstacle au cours d'un roulage ;
La figure 4 montre un dispositif de protection d'un flanc selon une deuxième variante de l'invention ;
La figure 5 montre un élément de relief d'un dispositif selon une troisième variante de l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

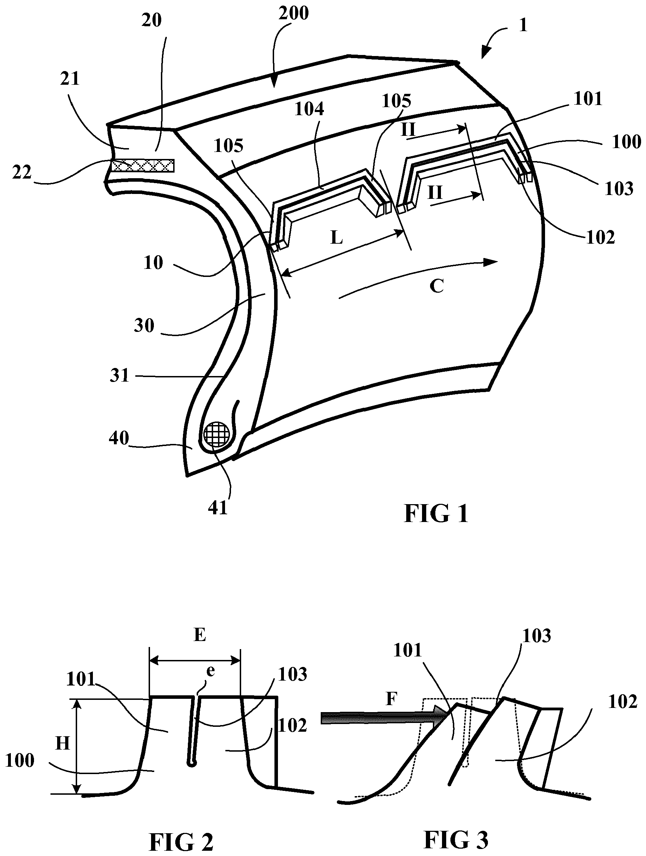

La figure 1 représente une vue en perspective d'une partie d'un pneu 1 comprenant un dispositif de protection d'un flanc selon une première variante de l'invention. Le pneu 1 montré comprend une partie sommitale 20 prolongée de part et d'autre par des flancs 30, ces flancs 30 se raccordant à des bourrelets 40 destinés à venir en contact avec une jante de montage du pneu (non représentée ici).

Le pneu 1 est renforcé par une armature de carcasse 31 constituée par une pluralité de renforts. Dans le cas présent ces renforts sont ancrés dans chaque bourrelet 40 sur des armatures de bourrelet 41 et s'étendent de bourrelet à bourrelet en passant par les flancs et la partie sommitale 20.

Dans le cas décrit, seul le flanc 30 destiné à être positionné de manière à être visible de l'extérieur du véhicule sur lequel est monté le pneu est pourvu d'un dispositif de protection 10 dudit flanc. Bien entendu cette invention peut être mise en oeuvre sur les deux flancs d'un même pneu.

La partie sommitale 20 comprend radialement à l'extérieur de l'armature de carcasse 30 une armature de sommet 22 et radialement à l'extérieur une bande de roulement 21 dont une surface est destinée à servir de surface de roulement 200.

Sur le flanc 30 on distingue un dispositif de protection 10 contre des agressions externes pouvant être générées par des obstacles contre lesquels le flanc externe du pneu vient en contact pendant le roulage.

Ce dispositif 10 est constitué par une pluralité d'éléments en relief 100 solidaires du flanc 30, ces éléments en relief 100 étant disposés les uns à côté des autres dans la direction circonférentielle (repérée sur la figure 1 par la flèche C) sur une seule ligne. La distance circonférentielle existant entre chaque élément est réduite afin d'empêcher tout obstacle de venir agresser directement le flanc. Les éléments de relief du dispositif de protection sont localisés entre une extrémité axiale de la partie sommitale et les points du flanc axialement les plus à l'extérieur lorsque le pneu est monté sur sa jante de montage et gonflé à sa pression d'usage. Cette disposition selon une seule ligne circonférentielle pourrait bien sûr être complétée par une autre ligne circonférentielle comprenant de même type de motifs.

Chaque élément de relief 100 comprend une région intermédiaire 104 de forme allongée dans la direction circonférentielle. Cette région intermédiaire 104 comprend deux extrémités et est prolongée, à chacune de ses deux extrémités, par une extension 105 faisant un angle moyen non nul avec la région intermédiaire 104 allongée de l'élément de relief 100, dans le cas présent cet angle est sensiblement égal à 45°.

En outre, chaque élément de relief 100 est formé par au moins deux parties en vis-à-vis 101, 102, ces parties en vis-à-vis étant, au moins partiellement, disjointes l'une de l'autre selon une zone de séparation 103 de largeur moyenne égale à 1 mm dans le cas présenté. Cette zone de séparation est orientée de manière substantielle dans la direction circonférentielle dans la région intermédiaire 104 et s'étend sur toute la longueur de chaque extension 105. En outre, chaque partie en vis-à-vis 102, 103 est apte à entrer en contact avec l'autre partie du même élément de relief de façon à fermer au moins partiellement la zone de séparation 103 existant entre lesdites deux parties en vis-à-vis afin de générer un frottement par glissement d'une partie sur l'autre lorsque l'une desdites parties entre en contact avec un obstacle externe, dans le but de réduire les risques de déchirures du flanc.

L'intérêt de prolonger la région intermédiaire par des extensions faisant un angle par rapport à cette région intermédiaire est d'améliorer l'efficacité du dispositif lorsque la ligne d'action de l'effort exercé par un obstacle n'est pas dans une direction strictement radiale.

Selon une variante intéressante, chaque extension d'un élément de relief du dispositif fait un angle au moins égal à 40° avec la direction circonférentielle

La figure 2 représente une vue en coupe selon un plan II-II de l'élément de relief 100 montré avec la figure 1. Sur cette coupe on distingue les deux parties 101, 102 d'un même élément de relief 100 dans un état non sollicité. Cet élément de relief a une hauteur H égale à 5 mm et une longueur circonférentielle hors-tout L égale à 100 mm et une épaisseur moyenne E égale à 10 mm.

La figure 3 montre une vue en coupe de l'élément de relief tel que représenté sur la figure 2 lorsque cet élément vient en contact avec un obstacle. L'action de cet obstacle est schématisée par une flèche F sur la figure 3. L'obstacle exerce une sollicitation qui a la particularité d'être d'intensité et de direction variables puisque le pneu est en rotation lorsque ce contact se réalise. Sous cette sollicitation une première partie 101 de l'élément de relief 100 du dispositif 10 fléchit et vient en contact sur une seconde partie 102 et ferme ainsi partiellement la zone de séparation 103 entre ces parties en vis-à-vis dans un premier temps puis cette seconde partie 102 est amenée à fléchir elle aussi. Enfin un glissement se produit dans la zone de contact entre la première partie et la seconde partie, ce glissement étant modulé par les forces de frottement qui s'y développent.

Grâce à ce mécanisme il a été observé qu'il est possible de limiter les déformations de l'armature de carcasse dans le flanc lors d'un contact avec un obstacle pendant un roulage, le dispositif de protection selon l'invention absorbant une grande partie des efforts de contact avec l'obstacle et redistribuant ces efforts de contact d'une manière moins pénalisante pour l'armature de carcasse.

La première variante décrite avec les figures 1 à 3 comprend deux parties en vis-à-vis par élément du dispositif de protection, ces parties étant destinées à venir en contact l'une contre l'autre lors d'un contact avec un corps externe. Bien entendu, il est tout à fait possible de former davantage de parties pour un même élément, ces parties étant prévues pour venir en contact les unes avec les autres.

Dans une variante non représentée la zone de séparation des parties en vis-à-vis destinées à coopérer par contact de frottement sont pourvues de moyens de réduction des mouvements relatifs d'une partie par rapport à l'autre. Ces moyens peuvent consister en une forme en zigzag ou une forme comportant des ondulations.

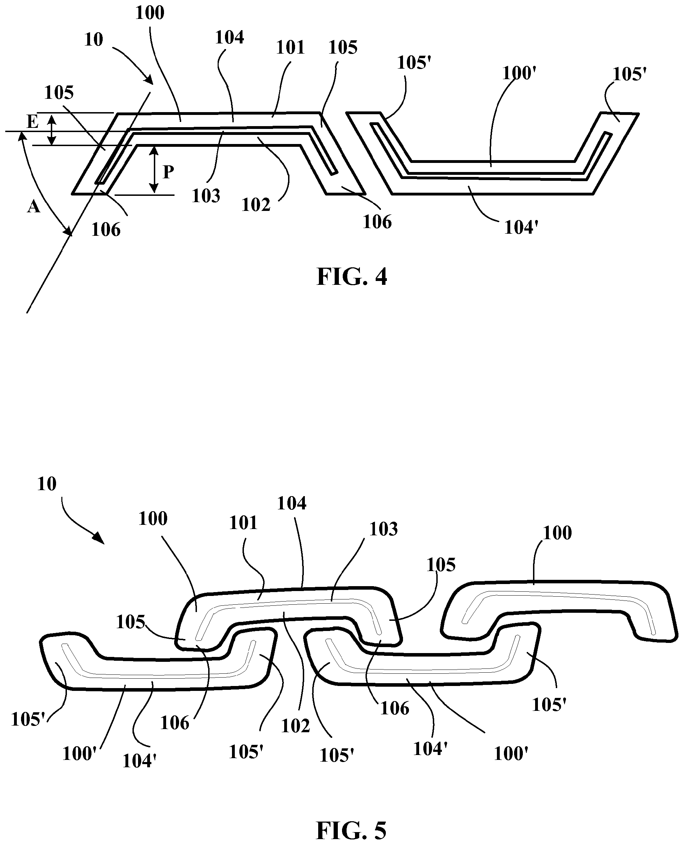

La figure 4 montre un dispositif de protection d'un flanc selon une deuxième variante de l'invention. Dans cette variante, le dispositif 10 de protection de flanc est formé par une succession dans la direction circonférentielle d'éléments de relief 100, 100' ayant tous les mêmes caractéristiques géométriques. Chaque élément 100 comprend une région intermédiaire 104 de forme allongée dans la direction circonférentielle. Cette région intermédiaire 104 comprend deux extrémités et est prolongée, à chacune de ses deux extrémités, par une extension 105 faisant un angle moyen A non nul avec la région intermédiaire 104 allongée de l'élément de relief 100, dans le cas présent cet angle est sensiblement égal à 45°.

En outre, chaque élément de relief 100 est formé par au moins deux parties en vis-à-vis 101, 102, ces parties en vis-à-vis étant, au moins partiellement, disjointes l'une de l'autre selon une zone de séparation 103 de largeur moyenne égale à 1 mm dans le cas présenté. Cette zone de séparation est orientée de manière substantielle dans la direction circonférentielle dans la région intermédiaire 104 et s'étend sur une partie seulement de la longueur de chaque extension 105 de manière à laisser en place des ponts de matière 106 entre les parties en vis-à-vis 101, 102. Chaque partie en vis-à-vis 102, 103 est apte à entrer en contact avec l'autre partie du même élément de relief de façon à fermer au moins partiellement la zone de séparation 103 afin de générer un frottement par glissement d'une partie sur l'autre lorsque l'une desdites parties entre en contact avec un obstacle externe, dans le but de réduire les risques de déchirures du flanc.

Dans cette variante les éléments 100' sont inversés par rapport aux éléments 100 et la distance séparant les éléments 100, 100' est appropriée afin d'empêcher le passage de tout obstacle entre deux éléments.

La figure 5 montre un dispositif 10 de protection de flanc selon une troisième variante de l'invention, ce dispositif comportant une pluralité d'éléments de relief 100 et 100' pouvant interagir entre eux. La description qui est donnée de chaque élément 100 est la même pour les éléments 100' à la différence près que ces derniers sont en position inverse par rapport aux éléments 100.

Chaque élément 100 comprend une région intermédiaire 104 allongée dans la direction circonférentielle, cette région intermédiaire 104 ayant deux extrémités pourvues chacune d'un prolongement 105 faisant chacune un angle moyen égal à 45° par rapport à la direction de la région intermédiaire 104. Chaque élément 100' comprend une région intermédiaire 104' allongée dans la direction circonférentielle, cette région intermédiaire 104' ayant deux extrémités pourvues chacune d'un prolongement 105' faisant chacune un angle moyen égal à 45° par rapport à la direction de la région intermédiaire 104'.

Dans cette troisième variante, chaque élément de relief 100 (respectivement 100') comprend deux parties 101, 102 (respectivement 101', 102') séparée par une zone de séparation 103 (respectivement 103') s'étendant sur toute la longueur de la région intermédiaire 104' et en partie seulement dans chaque prolongement 105'. Dans cette variante, les éléments de relief 100 et les éléments de relief 100' sont disposés en alternance et de manière à ce qu'une extension d'un élément 100' ((respectivement 100) vienne se placer entre les extensions d'un élément 100 (respectivement 100').

De cette façon il est possible de fermer de manière efficace en totalité la circonférence du pneu. En outre, selon cette variante les éléments peuvent entrer en contact les uns avec les autres lors d'une agression par un obstacle.

L'invention décrite ici avec plusieurs de ses variantes ne saurait bien entendu être limitée à ces seuls exemples et diverses modifications, notamment des combinaisons entre les exemples décrits, peuvent être faites sans sortir du cadre défini par les revendications.

## Revendications

1. Pneu (1) pour véhicule destiné à porter de lourdes charges, ce pneu comprenant une armature de carcasse (31) ayant des renforts, ce pneu comportant une partie sommitale (20) comprenant une bande de roulement (21) destinée à être en contact avec une chaussée lors d'un roulage, cette partie sommitale comprenant une armature de sommet (22) étant prolongée de part et d'autre par des flancs (30), ces flancs étant eux-mêmes prolongés par des bourrelets (40) destinés à venir en contact avec une jante de montage, ce pneu (1) étant pourvu d'un dispositif de protection (10) d'au moins un flanc (30) contre les agressions extérieures, ce dispositif de protection (10) comprenant une pluralité d'éléments en relief (100) formés sur le flanc à protéger, cette pluralité d'éléments en relief de hauteur H étant disposée suivant la direction circonférentielle, ce pneu (1) étant **caractérisé en ce que** chaque élément en relief (100) comprend une région intermédiaire (104) de forme allongée dans la direction circonférentielle et cette région intermédiaire comprenant deux extrémités et est prolongée, à chacune de ses deux extrémités, par une extension (105) faisant un angle non nul avec la région intermédiaire allongée de l'élément de relief, **en ce que** chaque élément (100) est formé par au moins deux parties en vis-à-vis (101, 102), ces parties étant, au moins partiellement, disjointes les unes des autres selon une zone de séparation (103), cette zone de séparation étant orientée de manière substantielle dans la direction circonférentielle, et **en ce que** chaque partie (101, 102) est apte à entrer en contact avec une autre partie du même élément de relief (100) de façon à fermer au moins partiellement la zone de séparation (103) existant entre lesdites deux parties afin de générer un frottement par glissement d'une partie contre l'autre lorsque l'une desdites parties entre en contact avec un obstacle externe.

2. Pneu (1) selon la revendication 1 **caractérisé en ce que** l'angle moyen des extensions (105) des éléments de relief (100) avec la direction circonférentielle est au moins égal à 40°.

3. Pneu (1) selon la revendication 1 ou la revendication 2 **caractérisé en ce que** les parties (101, 102) des éléments en relief (100) du dispositif de protection destinées à entrer en contact les unes avec les autres sont reliées entre elles de manière solidaire les unes avec les autres grâce à la présence de pont de matière (106).

4. Pneu (1) selon l'une des revendications 1 à 3 **caractérisé en ce que**, chaque élément en relief du dispositif de protection ayant une hauteur H et une longueur circonférentielle L, la zone de séparation (103) entre deux parties d'un même élément en relief est au moins égale à 50% de la surface de chaque partie, cette dernière étant égale au produit de sa hauteur par sa longueur mesurée dans la direction circonférentielle.

5. Pneu (1) selon l'une des revendications 1 à 4 **caractérisé en ce que** les parties (101, 102) d'élément en relief du dispositif de protection comportent des géométries augmentant les efforts de frottement dans la zone de séparation.

6. Pneu (1) selon la revendication 4 **caractérisé en ce que** la zone de séparation (103) a une géométrie comportant des ondulations ou des zigzags.

7. Pneu (1) selon la revendication 5 ou la revendication 6 **caractérisé en ce que** les parties (101, 102) d'élément en relief du dispositif de protection sont pourvues d'une rugosité apte à augmenter les efforts de frottement dans la zone de séparation.

8. Pneu (1) selon l'une des revendications 1 à 7 **caractérisé en ce que** la zone de séparation (103) s'étend sur une hauteur au moins égale à 50% de la hauteur H de chaque partie d'élément en relief.

9. Pneu (1) selon l'une des revendications 1 à 7 **caractérisé en ce que** la zone de séparation (103) s'étend sur une hauteur au moins égale à 80% de la hauteur H de chaque partie d'élément en relief.

10. Pneu (1) selon l'une des revendications 1 à 8 **caractérisé en ce que** la longueur circonférentielle moyenne L de chaque élément en relief est au moins égale à 20 mm et au plus égale à 150 mm, la hauteur H est au moins égale à 2 mm et au plus 7 mm et l'épaisseur E est au moins égale à 0.5 fois la hauteur H et au plus 3 fois la même hauteur, cela pour un pneu de diamètre égal ou supérieur à 20 pouces.

## Patentansprüche

1. Reifen (1) für ein Fahrzeug zum Tragen schwerer Lasten, dieser Reifen umfassend eine Karkassenarmierung (31) mit Verstärkungen, dieser Reifen umfassend einen Scheitelabschnitt (20) umfassend einen Laufstreifen (21), der dazu bestimmt ist, sich bei einem Rollen mit einer Straße in Kontakt zu befinden, dieser Scheitelabschnitt umfassend eine Scheitelarmierung (22), die beiderseits von Flanken (30) verlängert ist, wobei diese Flanken selbst von Wülsten (40) verlängert sind, die dazu bestimmt sind, mit einer Montagefelge in Kontakt zu treten, wobei dieser Reifen (1) mit einer Vorrichtung zum Schützen (10) mindestens einer Flanke (30) gegen äußere Aggressionen versehen ist, diese Schutzvorrichtung (10) umfassend mehrere Reliefelemente (100), die auf der zu schützenden Flanke ausgebildet sind, wobei diese mehreren Reliefelemente einer Höhe H in der Umfangsrichtung ausgebildet sind, wobei dieser Reifen (1) **dadurch gekennzeichnet ist, dass** jedes Reliefelement (100) einen Zwischenbereich (104) länglicher Form in der Umfangsrichtung umfasst und dieser Zwischenbereich zwei Enden umfasst und an jedem seiner zwei Enden durch eine Erweiterung (105) verlängert ist, die einen Winkel ungleich Null mit dem länglichen Zwischenbereich des Reliefelements bildet, dadurch, dass jedes Element (100) von mindestens zwei gegenüberliegenden Abschnitten (101, 102) gebildet ist, wobei diese Abschnitte zumindest teilweise entsprechend einem Trennungsbereich (103) voneinander getrennt sind, wobei dieser Trennungsbereich im Wesentlichen in der Umfangsrichtung orientiert ist, und dadurch, dass jeder Abschnitt (101, 102) geeignet ist, mit einem anderen Abschnitt desselben Reliefelements (100) in Kontakt zu treten, um den Trennungsbereich (103), der zwischen den zwei Abschnitten vorliegt, zumindest teilweise zu schließen, um eine Reibung durch Gleiten eines Abschnitts gegen einen anderen zu erzeugen, wenn der eine der Abschnitte mit einem äußeren Hindernis in Kontakt tritt.

2. Reifen (1) nach Anspruch 1, **dadurch gekennzeichnet, dass** der mittlere Winkel der Erweiterungen (105) der Reliefelemente (100) mit der Umfangsrichtung mindestens 40° beträgt.

3. Reifen (1) nach Anspruch 1 oder 2, **dadurch gekennzeichnet, dass** die Abschnitte (101, 102) der Reliefelemente (100) der Vorrichtung zum Schützen, die dazu bestimmt sind, miteinander in Kontakt zu treten, dank des Vorhandenseins einer Materialbrücke (106) fest miteinander verbunden sind.

4. Reifen (1) nach einem der Ansprüche 1 bis 3, **dadurch gekennzeichnet, dass**, da jedes Reliefelement der Vorrichtung zum Schützen eine Höhe H und eine Umfangslänge L aufweist, der Trennungsbereich (103) zwischen zwei Abschnitten eines selben Reliefelements mindestens gleich 50% der Fläche jedes Abschnitts ist, wobei dieser gleich dem Produkt seiner Höhe mal seine Länge ist, die in der Umfangsrichtung gemessen wird.

5. Reifen (1) nach einem der Ansprüche 1 bis 4, **dadurch gekennzeichnet, dass** die Reliefelement-Abschnitte (101, 102) der Vorrichtung zum Schützen Geometrien aufweisen, die die Reibungskräfte in dem Trennungsbereich erhöhen.

6. Reifen (1) nach Anspruch 4, **dadurch gekennzeichnet, dass** der Trennungsbereich (103) eine Geometrie aufweist, die Wellen- oder Zickzackformen umfasst.

7. Reifen (1) nach Anspruch 5 oder 6, **dadurch gekennzeichnet, dass** die Reliefelement-Abschnitte (101, 102) der Vorrichtung zum Schützen mit einer Rauheit versehen sind, die geeignet ist, die Reibungskräfte in dem Trennungsbereich erhöhen.

8. Reifen (1) nach einem der Ansprüche 1 bis 7, **dadurch gekennzeichnet, dass** der Trennungsbereich (103) sich auf einer Höhe erstreckt, die mindestens gleich 50% der Höhe H jedes Reliefelement-Abschnitts ist.

9. Reifen (1) nach einem der Ansprüche 1 bis 7, **dadurch gekennzeichnet, dass** der Trennungsbereich (103) sich auf einer Höhe erstreckt, die mindestens gleich 80% der Höhe H jedes Reliefelement-Abschnitts ist.

10. Reifen (1) nach einem der Ansprüche 1 bis 8, **dadurch gekennzeichnet, dass** für einen Reifen eines Durchmessers größer oder gleich 20 Zoll die mittlere Umfangslänge L jedes Reliefelements mindestens gleich 20 mm und höchstens gleich 150 mm ist, die Höhe H mindestens gleich 2 mm und höchstens 7 mm und die Dicke E mindestens gleich dem 0.5-fachen der Höhe H und höchstens dem 3-fachen derselben Höhe ist.

## Claims

1. Tyre (1) for a vehicle intended to carry heavy loads, this tyre comprising a carcass reinforcement (31) having reinforcers, this tyre comprising a crown part (20) comprising a tread (21) intended to be in contact with a roadway during running, this crown part comprising a crown reinforcement (22) extended on each side by sidewalls (30), these sidewalls themselves being extended by beads (40) intended to come into contact with a mounting rim, this tyre (1) being provided with a protection device (10) protecting at least one sidewall (30) against external attack, this protection device (10) comprising a plurality of raised elements (100) formed on the sidewall that is to be protected, this plurality of raised elements of height H being arranged in the circumferential direction, this tyre (1) being **characterized in that** each raised element (100) comprises an intermediate region (104) of elongate shape in the circumferential direction and this intermediate region comprising two ends and is extended, at each of its two ends, by an extension (105) that makes a non-zero angle with the elongate intermediate region of the raised element and **in that** each element (100) is formed by at least two facing parts (101, 102), these parts being at least partially disjointed from one another along a separation zone (103), this separation zone being oriented substantially in the circumferential direction, and **in that** each part (101, 102) is able to come into contact with another part of the same raised element (100) so as to at least partially close the separation zone (103) that exists between the said two parts so as to generate friction by the sliding of one part against the other when one of the said parts comes into contact with an external obstacle.

2. Tyre (1) according to Claim 1, **characterized in that** the mean angle of the extensions (105) of the raised elements (100) with the circumferential direction is at least equal to 40°.

3. Tyre (1) according to Claim 1 or Claim 2, **characterized in that** the parts (101, 102) of the raised elements (100) of the protection device which are intended to come in contact with one another are connected to one another securely by the presence of a bridge of material (106).

4. Tyre (1) according to one of Claims 1 to 3, **characterized in that**, with each raised element of the protection device having a height H and a circumferential length L, the separation zone (103) separating two parts of one and the same raised element is at least equal to 50% of the surface area of each part, the latter being equal to the product of its height and its length measured in the circumferential direction.

5. Tyre (1) according to one of Claims 1 to 4, **characterized in that** the parts (101, 102) of raised element of the protection device have geometries that increase the friction forces in the separation zone.

6. Tyre (1) according to Claim 4, characterized that the separation zone (103) has a geometry comprising undulations or zigzags.

7. Tyre (1) according to Claim 5 or Claim 6, **characterized in that** the parts (101, 102) of raised element of the protection device are provided with a roughness able to increase the friction forces in the separation zone.

8. Tyre (1) according to one of Claims 1 to 7, **characterized in that** the separation zone (103) extends over a height at least equal to 50% of the height H of each part of raised element.

9. Tyre (1) according to one of Claims 1 to 7, **characterized in that** the separation zone (103) extends over a height at least equal to 80% of the height H of each part of raised element.

10. Tyre (1) according to one of Claims 1 to 8, **characterized in that** the mean circumferential length L of each raised element is at least equal to 20 mm and at most equal to 150 mm, the height H is at least equal to 2 mm and at most 7 mm and the thickness E is at least equal to 0.5 time the height H and at most 3 times the same height, that being for a tyre of a diameter equal to or exceeding 20 inches.
